# EUROPÄISCHE PATENTANMELDUNG

(11) **EP 0 859 029 A2**
(43) Veröffentlichungstag der Anmeldung: **19.08.1998**
(21) Anmeldenummer: 98102177.7
(22) Anmeldetag: 09.02.1998
(51) Int. Cl.: C08L 83/08

(54) **Wässrige, siliziumorganische Verbindungen enthaltende Zusammensetzungen mit kleiner Partikelgrösse**

(30) Priorität: 14.02.1997 DE 19705707
(71) Anmelder: Hüls Silicone Gesellschaft mit beschränkter Haftung, D-01610 Nünchritz (DE)
(72) Erfinder: Rautschek, Holger, Dr. rer. nat., 01612 Nünchritz (DE); Otto, Reiner, 01612 Nünchritz (DE)
(74) Vertreter: Zöllner, Gudrun

(57) **Zusammenfassung**

Die Erfindung betrifft wässrige, siliziumorganische Verbindungen enthaltende Zusammensetzungen mit kleiner Partikelgröße, welche stickstoffhaltige Polyorganosiloxane, nichtionogene Emulgatoren, Wasser, organische und/oder anorganische Säure sowie eine aliphatische organische Verbindung enthalten.

## Beschreibung

Die Erfindung betrifft wässrige, siliziumorganische Verbindungen enthaltende Zusammensetzungen mit kleiner Partikelgröße.

Wässrige, siliziumorganische Verbindungen enthaltende Zusammensetzungen, sind bekannt (W.Noll, Chemie und Technologie der Silicone, 1968). Diese Produkte zeichnen sich durch ihre Wasserverdünnbarkeit aus und ermöglichen die einfache Anwendung auch hochviskoser siliziumorganischer Verbindungen, der Polyorganosiloxane, ohne dass Lösemittel verwendet werden müssen. Diese auch als Siliconemulsionen bezeichneten wässrigen Formulierungen finden ihre Anwendung z. B. als Trennmittel, Gleitmittel und zur Textilausrustung. Insbesondere bei der Anwendung im Textilbereich wird eine besonders geringe Partikelgröße und hohe Stabilität gefordert, um z. B. unerwünschte Fleckenbildung zu vermeiden.

Es wurde gefunden. dass man auf der Basis von Polyorganosiloxanen, welche polare Gruppen tragen, besonders feinteilige wassrige Zusammensetzungen. sogenannte Microemulsionen herstellen kann. Dabei werden siliziumorganische Verbindung, Emulgator, der in der siliziumorganischen Verbindung unlöslich ist, und Wasser zu einem Konzentrat verarbeitet und dieses Konzentrat schnell verdunnt (EP 0 138 192). Durch Zusatz von Essigsäure zum Produkt ist bei Verwendung von siliziumorganischen Verbindungen, welche im Molekül basischen Stickstoff enthalten eine zusätzliche Stabilisierung erreichbar (EP 0 342 834). Eine weitere Erhöhung der Stabilität kann dadurch erreicht werden, dass man den Prozess der Herstellung der Siliconmicro-emulsion bei Temperaturen oberhalb 50°C durchführt (EP 0 358 652). Dadurch, dass man die basischen Stickstoffgruppen der siliziumorganische Verbindungen vor dem Mischen mit dem Emulgator mit z. B. Essigsäure in die Salzform überführt, erreicht man von Anfang eine klare Mischung und erhält auch ohne Erwärmen eine klare stabile Microemulsion (EP 0 442 098).
Oftmals haben die so hergestellten wässrigen Zusammensetzungen noch nicht die gewünschten Eigenschaften. So besteht ein wesentliches Problem darin. dass oft eine sehr hochviskose Microemulsion entsteht, welche nur einen geringen Wirkstoffgehalt aufweist. Um diese Probleme zu lösen und auch die Stabilität und die anwendungstechnischen Eigenschaften weiter zu verbessern, hat man versucht amphotere Tenside einzusetzen (EP 0 417 047, EP 0 417 559). Nachteilig an dieser Verfahrensweise ist, dass die Stabilität der Emulsionen sehr stark von einem optimalen pH-Wert abhängig ist und die in Kombinationen mit elektrolythaltigen Kompenenten bei der Anwendung zusätzliche Stabilitätsprobleme zu erwarten sind.

Vorzugsweise bei der Anwendung von nichtionogenen Emulgatoren sucht man nach niedermolekularen, polaren, organischen Verbindungen, welche zwar nicht als Emulgator wirken, aber dennoch die Eigenschaften der Microemulsionen verbessern. Dass der Zusatz derartiger Stoffe zur Stabilisierung von Microemulsionen beitragen kann, ist aus der Literatur über Microemulsionen von Alkanen bekannt (HAUTHAL, H.G. et al.: Z. Chem. **30,** 274-281, 1990).

In wässrigen, siliziumorganische Verbindungen enthaltenden Zusammensetzungen werden bisher ausschließlich flüssige organische Verbindungen verwendet. Beispiele sind einwertige aliphatische Alkohole mit 5 bis 18 Kohlenstoffatomen (DE 38 42 471), Ethylenglycol und Propylenglycol (EP 0 404 027), Glycerin oder Polyethylenglycol (EP 0 532 256) oder Alkylenglycolmonoalkylether (EP 0 646 618, JP 08 073 748). Die so hergestellten Emulsionen sind noch nicht in jeder Hinsicht zufriedenstellend. Neben der Stabilität ist es insbesondere die Vergilbungsneigung bei der Lagerung oder der Verwendung der Emulsionen, die verbessert werden muss.

Es ist die Aufgabe der vorliegenden Erfindung, wassrige, siliziumorganische Verbindungen enthaltende Zusammensetzungen mit kleiner Partikelgröße vorzuschlagen, welche stabil sind und nur eine geringere Tendenz zur Vergilbung aufweisen.

Gegenstand der Erfindung sind wässrige, siliziumorganische Verbindungen enthaltende Zusammensetzungen bestehend aus:
(A) mindestens einem stickstoffhaltigem Polyorganosiloxan,
(B) mindestens einem nichtionogenen Emulgators mit einem HLB-Wert zwischen 8 und 15,
(C) Wasser,
(D) mindestens einer organischen und/oder anorganischen Säure
   sowie
(E) 0,1 bis 10 Gew.-%. vorzugsweise 1 bis 5 Gew -%, bezogen auf die Gesamtmischung, einer aliphatischen organischen Verbindung der allgemeinen Formel (HOCH₂)₃CR (I), wobei R C₁₋₄-Alkyl- oder CH₂OH-Gruppen bedeutet.

Die verwendete stickstoffhaltige Verbindung (A) ist in der Gesamtzusammensetzung üblicherweise mit 1 bis 30 Gew.-%, vorzugsweise mit 10 bis 25 Gew.-%, enthalten und entspricht der allgemeinen Formel (II) R¹ₐR²_{b}(R³O)_{c}SiO_{(4-a-b-c)/2} , worin R¹ gleiche oder verschiedene aliphatische Kohlenwasserstoffreste mit 1 bis 20 Kohlenstoffatomen oder Phenyl mit der Maßgabe darstellt, dass maximal 50% der Reste Phenyl sind, R² gleiche oder verschiedene Reste mit 3 bis 20 Kohlenstoffatomen mit mindestens einem basischen Stickstoffatom sowie R³ Wasserstoff oder einen aliphatischen Kohlenwasserstoffrest mit 1 bis 4 Kohlenstoffatomen bedeuten, wobei die Summe (a+b+c) einen Wert von 1,7 bis 2,3 annimmt, der Wert von b ausdruckt, dass 0,05 bis 1,0 Milliequivalent basischer Stickstoff je g der Verbindung (II) enthalten sind, und der Wert für c zwischen 0 und 0,3 liegt. Bevorzugte Reste R² sind Aminopropyl-, Amino-ethylaminopropyl-, Cyclohexylaminopropyl-, Dimethylaminoethylaminopropyl- und n-Butylaminoethylaminopropylreste. Der Amingehalt der siliziumorganischen Verbindung beträgt 0,05 bis 1,0 Millequivalent pro g (meq/g), d. h. dass bei der Säure/Basen-Titration 1g Verbindung (II) 0,05 bis 1 ml 1 molare Salzsäure verbraucht. Vorzugsweise beträgt der Amingehalt 0,2 bis 0,5 meq/g. Die Summe aus a,b,c in der allgemeinen Formel (II) beträgt vorzugsweise 1,9 bis 2,1. Der Wert von c bestimmt den Gehalt an reaktiven Hydroxy und/oder Alkoxygruppen in Verbindung (I) und liegt vorzugsweise zwischen 0 und 0,1. Bevorzugte Reste R³ sind Wasserstoff-, Methyl- und Ethylreste.

Beispielsweise können die siliziumorganische Verbindungen der Formel (II) eine Viskosität von 100 bis 50000 mm²/s aufweisen. Als R¹ in allgemeiner Formel (II) sind Methylgruppen bevorzugt. R¹ kann jedoch auch jeder andere bekannte Kohlenwasserstoffrest sein. Das schließt u. a. folgende Reste ein: n-Alkylreste mit 2 bis 20 Kohlenstoffatomen wie z. B. Ethyl-, Hexyl-, Cyclohexylreste; iso-Alkylreste mit 3 bis 20 Kohlenstoffatomen wie Isopropyl- und Isoamylreste: Alkylreste mit tertären Kohlenstoffatomen wie tert-Butyl- und tert-Pentylreste; aromatische Kohlenwasserstoffreste wie z.B: Phenyl-, Naphthyl-, Anthrylreste, Alkylarylreste bei denen das Silizium entweder an einen aromatischen Kohlenstoff wie z. B. bei Tolylresten, oder an einen aliphatischen Kohlenstoff wie z. B. bei Benzylresten, gebunden ist; Reste mit olefinische Doppelbindungen wie z. B. Vinyl-, Allyl- und Norbornylreste sowie substituierte Kohlenwasserstoffreste wie z. B. Trifluorpropyl-, Cyanoethyl-, Alkoxyaryl-, Alkoxy-, Alkyl- und Halogenarylreste. Die Reste R² entsprechen vorzugsweise der allgemeinen Formel (III) -Q-(NR⁴Q¹)_{d}NR⁴₂, wobei Q einen zweiwertigen Kohlenwasserstoffrest mit mindestens 3 Kohlenstoffatomen, Q¹ einen zweiwertigen Kohlenwasserstoffrest mit 2 bis 10 Kohlenstoffatomen und R⁴ unabhängig voneinander gleiche oder verschiedene Reste ausgewahlt aus Wasserstoff, C₁₋₁₀-Alkyl- oder Cycloalkylreste bedeuten.

Dabei nimmt d vorzugsweise Werte von 0 bis 3 an. Zwei Reste R⁴ können auch einen Ring bilden, z. B. wenn der Rest der Formel (III) einem Piperazyl-N-propylrest oder einem Piperidinyl-N-propylrest entspricht. Die Amingruppen in den Resten der allgemeinen Formel (III) können auch ganz oder teilweise als Amid- oder Imidgruppen vorliegen, z. B. nachdem aminische Reste mit Acetanhydrid umgesetzt wurden.

Der nichtionogene Emulgator (B) ist mit 1 bis 20 Gew.-%, vorzugsweise mit 5 bis 15 Gew.-%, in der Gesamtmischung enthalten, wobei der Emulgator bzw. die Emulgatormischung einen durchschnittlichen HLB-Wert zwischen 8 und 15, vorzugsweise von 9 bis 12, aufweist. Der Begriff HLB-Wert ist z. B. in "Das Atlas HLB-System" Atlas Chem. Ind. 1963 und in K. Shinoda "Emulsion, Microemulsion and Solubilization" (J. Wiley and Sons Inc. 1979) definiert. Diese Emulgatoren sind dem Fachmann bekannt, Beispiele dafür sind Polyethylenglycolether und -ester von natürlichen und/oder synthetischen aliphatischen Alkoholen, Alkylphenolen, Carbonsäuren und natürlichen Fetten wie Rhizinusöl sowie mit Polethylenglycol und/oder Polypropylenglycol substituierte Siloxane. Auch Alkylpolyglycoside sind als Emulgatoren in den erfindungsgenmäßen Silicon-Microemulsionen einsetzbar. Besonders bevorzugte Emulgatoren sind Polyethylenglycolether von synthetischen verzweigten Alkoholen mit 9 bis 15 Kohlenstoffatomen, wie z. B. Ethoxylate von Isotridecylakohol oder Trimethylnonanol.

Wasser (C) ist vorzugsweise zu 50 bis 98 Gew.-%, insbesondere zu 60 bis 85 Gew.-%, in der Gesamtmischung enthalten.

Als organische und/oder anorganische Säuren (D), die vorzugsweise mit 0,01 bis 3 Gew.-%, insbesondere mit 0,05 bis 2 Gew.-%, in der Gesamtmischung enthalten sind, werden üblicherweise Verbindungen, die einen pH-Wert kleiner als 6 gewährleisten, verwendet. Beispiele dafür sind Salzsäure, Schwefelsäure, Trifluormethansulfonsäure, p-Toluolsulfonsäure, Milchsäure, Bernsteinsäure, Chloressigsaure, Trifluoressigsäure und Ameisensäure. Auch Aminosäuren können zur Einstellung des pH-Wertes eingesetzt werden. Besonders bevorzugt ist die Verwendung von Essigsäure.

Als Verbindung E werden vorzugsweise solche mit einem Schmelzpunkt größer 25 °C, wie Pentaerythrit (Schmelzpunkt 262°C). Trishydroxymethylethan (Schmelzpunkt 204°C) und Trishydroxymethylpropan (Schmelzpunkt 57°C) eingesetzt. Diese Stoffe sind bekannt und kommerziell verfügbar. Sie werden üblicherweise durch alkalisch katalysierte Aldolkondensation aus Aldehyden mit 2 bis 4 Kohlenstoffatomen und Formaldehyd hergestellt. Bekannt sind sie als Rohstoffe für die Herstellung von Alkydharzen. Polyethern, Polyestern, Polyurethanen und Sprengstoffen. Diese Stoffe selbst haben keine Emulgatoreigenschaften. Nur durch weitere Syntheseschritte. z. B. durch Veresterung mit Fettsäuren, sind aus diesen Verbindungen Emulgatoren herstellbar. Es war deshalb nicht zu erwarten, dass die Verbindungen fer allgemeinen Formel (I) ohne weitere Behandlung oder Umsetzung zur Herstellung von wassrigen, siliziumorganische Verbindungen enthaltende Zusammensetzungen kleiner Partikelgroße einsetzbar sind.

Die Herstellung der erfindungsgemäßen Zusammensetzungen erfolgt durch Vermischen der Komponenten (A) bis (E). Die Reihenfolge, die Temperatur und die Art der Vermischung sind frei wählbar. Es ist jedoch bevorzugt, dass zuerst Komponenten (A), (B) und (E) miteinander homogen vermischt werden, Komponente (C) kontinuierlich zudosiert wird und Komponente (D) während der Dosierung von (C) oder als letzte Komponente zugesetzt wird.

Es ist von Vorteil, während des gesamten oder eines Teils des Mischprozesses die Mischung mit Rotor-Stator-Homogenisatoren mit einer Umfanggeschwindigkeit von mindestens 5 m/s zu homogenisieren sowie eine Temperatur unterhalb 35°C einzuhalten.

Die Partikelgröße der erfindungsgemäßen Zusammensetzungen ist kleiner 0,1 µm. Bevorzugt sind Partikelgrößen kleiner 0,015 µm. Emulsionen mit derartig kleinen Partikelgrößen weisen bereits eine gute Durchlässigkeit für sichtbares Licht auf und erscheinen klar bis transluzent. Deshalb kann zur Charakterisierung der Teilchengröße auch die einfacher messbare Lichtdurchlässigkeit der Zusammensetzungen herangezogen werden. Vorzugsweise sind die Partikel der erfindungsgemäßen Zusammensetzungen so klein, dass die Lichtdurchlässigkeit bei 1cm Schichtdicke größer als 80% ist.

Die erfindungsgemäßen Zusammensetzungen können als weitere Komponenten bekannte Zusatzstoffe wie Katalysatoren, Silanvernetzer, Cellulosevernetzer, kationische oder anionische Tenside (z. B. als Netzmittel), Biocide und Farbstoffe enthalten.

Die erfindungsgemaßen wässrigen Zusammensetzungen weisen gegenüber denen ohne Verbindung (E) überraschenderweise eine verbesserte Stabilität und eine geringere Vergilbungsneigung auf. Insbesondere war es überraschend, dass feste organische Verbindungen als Kompenente zur Herstellung von feinteiligen Silicon-Microemulsionen geeignet sind und zu deutlichen Verbesserungen der Eigenschaften dieser Produkte führen.

Die Anwendung der erfindungsgemäßen Zusammensetzungen erfolgt vorzugsweise als Ausrustung in der Textilindustrie. Die Anwendung kann z. B. als Weichgriffmittel auf Baumwolle, Baumwoll-Polyester-Mischgeweben, Polyamiden und weiteren dem Fachmann bekannten Stoffen erfolgen. Dabei können sowohl gewebte als auch vliesartige Materialien zum Einsatz kommen. Eine weitere Anwendung ist z. B. die Antifilzausrüstung von Wolle.
Auch außerhalb der Textilindustrie können die erfindungsgemäßen Zusammensetzungen vorteilhaft eingesetzt werden, so in Polituren und in der Kosmetik z. B. in Haarpflegemitteln.

### Ausführungsbeispiele

Alle angegebenen Mengen beziehen sich auf Gewichtsteile.

Zur Herstellung der erfindungsgemäßen Produkte wurden die Ausgangstoffe, falls nicht anders angegeben, bei Raumtemperatur in einem Becherglas mit einem Flügelrührer bei 300 Umdrehungen pro min vermischt.

Die Ergebnisse der Prüfungen der Beispiele sowie der Vergleichsbeispiele sind abschließend in einer Tabelle zusammengefasst.

### Beispiel 1

18 Teile eines trimethylsiloxyterminierten Polydimethylsiloxans mit seitenständigen Aminoethylaminopropylgruppen, einer Viskosität von 800 mm²/s und einem Amingehalt von 0,3 meq/g wurden mit 10 Teilen eines Trimethylnonanolethoxylates mit 6 Ethylenoxideinheiten (HLB =11,6) und 3 Teilen Pentaerithrit vermischt. 69 Teile Wasser wurden innerhalb von 5 min kontinuierlich zudosiert. Die Temperatur während des Mischprozesses betrug ca. 30°C Abschließend wurden 0,5 Teile Eisessig zugegeben.

### Beispiel 2

18 Teile eines trimethylsiloxyterminierten Polydimethylsiloxans mit seitenständigen Aminoethylaminopropylgruppen, einer Viskositat von 4200 mm²/s und einem Amingehalt von 0,3 meq/g wurden mit 10 Teilen eines Isotridecylalkoholethoxylates mit durchschnittlich 6 bis 7 Ethylenoxideinheiten (HLB = 12,2) und 3 Teilen Trishydroxymethylethan vermischt. 69 Teile Wasser wurden innerhalb von 8 min kontinuierlich zudosiert. Abschließend wurden 0,5 Teile Eisessig zugegeben. Die Teilchengröße des Produktes wurde mit einem Microtrac Ultrafine Particle Analyser der Fa. Leeds & Northrup bestimmt. Der Mittelwert der Volumenverteilung lag bei 0,0078 µm.

### Beispiel 3

18 Teile eines trimethylsiloxyterminierten Polydimethysiloxans mit seitenständigen N-Butylaminoethylaminopropylgruppen, einer Viskosität von 800 mm2/s und einem Amingehalt von 0,3 meq/g wurden mit 9 Teilen eines Isotridecylalkoholethoxylates mit 5 Ethylenoxideinheiten (HLB = 10,4) und 3 Teilen Trishydroxymethylpropan vermischt. Die Mischung wurde mit einem 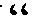 Ultra-Turrax 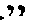 bei einer Umfangsgeschwindigkeit des Homogenisierwerkzeuges von 8 m/s 2 Minuten homogenisiert. Dann wurden 0,5 Teile Eisessig zugegeben und weiter 3 min homogenisiert. Abschließend wurden 69 Teile Wasser innerhalb von 5 min kontinuierlich zudosiert.

### Beispiel 4

18 Teile eines trimethylsiloxyterminierten Polydimethylsiloxans mit seitenständigen Aminoethylaminopropylgruppen, einer Viskosität von 3000 mm²/s und einem Amingehalt von 0,25 meq/g wurden mit 10 Teilen eines eines Gemisches aus Isotridecylalkoholethoxylat mit 4 Ethylenoxideinheiten und aus Isotridecylalkoholethoxylat mit 40 Ethylenoxideinheiten (durchschnittlicher HLB-Wert war 12), 20 Teilen Wasser und 3 Teilen Tristrimethylolpropan vermischt. 49 Teile Wasser wurden innerhalb von 5 min kontinuierlich zudosiert. Abschließend wurden 0,4 Teile Eisessig zugegeben.

### Beispiel 5

20 Teile eines Methoxydimethylsiloxyterminierten Polydimethylsiloxans mit Aminoethylammopropylgruppen, einer Viskosität von 150 mm²/s und einem Amingehalt von 0,4 meq/g wurden mit 10 Teilen eines Isotridecylalkoholethoxylates mit 6 Ethylenoxideinheiten und 4 Teilen Pentaerithrit vermischt. 69 Teile Wasser wurden innerhalb von 5 min kontinuierlich zudosiert. Abschließend wurden 0,6 Teile Eisessig zugegeben.

### Vergleichsbeispiel V1

18 Teile eines trimethylsiloxyterminierten Polydimethysiloxans mit seitenständigen Aminoethylaminopropylgruppen, einer Viskosität von 4200 mm2/s und einem Amingehalt von 0,3 meq/g wurden mit 10 Teilen eines Isotridecylalkoholethoxylates mit durchschnittlich 6 bis 7 Ethylenoxideinheiten (HLB = 12,2) und 3 Teilen n-Octanol vermischt. 69 Teile Wasser wurden innerhalb von 8 min kontinuierlich zudosiert. Abschließend wurden 0,5 Teile Eisessig zugegeben.

### Vergleichsbeispiel V2

18 Teile eines trimethylsiloxyterminierten Polydimethylsiloxans mit seitenständigen Aminoethylaminopropylgruppen, einer Viskosität von 4200 mm²/s und einem Amingehalt von 0,3 meq/g wurden mit 10 Teilen eines Isotridecylalkoholethoxylates mit durchschnittlich 6 bis 7 Ethylenoxideinheiten (HLB = 12,2) und 3 Teilen Ethylenglycolmonophenylether vermischt. 69 Teile Wasser wurden innerhalb von 8 min kontinuierlich zudosiert. Abschließend wurden 0,5 Teile Eisessig zugegeben.

### Vergleichsbeispiel V3

18 Teile eines trimethylsiloxyterminierten Polydimethylsiloxans mit seitenständigen Aminoethylaminopropylgruppen, einer Viskosität von 4200 mm²/s und einem Amingehalt von 0,3 meq/g wurden mit 10 Teilen eines Isotridecylalkoholethoxylates mit durchschnittlich 5 bis 6 Ethylenoxideinheiten (HLB = 11,2) vermischt. 69 Teile Wasser wurden innerhalb von 8 min kontinuierlich zudosiert. Die Mischung wurde mit einem 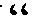 Ultra-Turrax 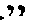 bei einer Umfangsgeschwindigkeit des Homogenisierwerkzeuges von 8 m/s 5 Minuten homogenisiert. Abschließend wurden 0,5 Teile Eisessig zugegeben.

### Ergebnisse

Alle Produkte waren sofort nach der Herstellung farblos.
Die Emulsionen wurden nach folgenden Kriterien geprüft:
- Aussehen sofort nach der Herstellung (A (sofort))
- Lichtdurchlässigkeit in 1cm Küvette bei 580 nm (T/%)
- Aussehen nach 30 d bei 50°C (A (50°C))
- Aussehen nach 9 Monaten Lagerung bei Raumtemperatur (A (270d)

Die Ergebnisse sind in der folgenden Tabelle zusammengestellt:

| Beispiel Nr. | A (sofort) | T / % | A (50°C) | A (270 d) |
|---|---|---|---|---|
| 1 | transluzent | 85 | transluzent, farblos | transluzent, farblos |
| 2 | klar | 99 | klar, farblos | klar, farblos |
| 3 | klar | 98 | klar, farblos | klar, farblos |
| 4 | transluzent | 78 | transluzent, farblos | transluzent, farblos |
| 5 | transluzent | 87 | transluzent, schwach gelblich | transluzent, schwach gelblich |
| V1 | klar | 98 | getrennt | getrennt |
| V2 | klar | 99 | transluzent, stark gelb | transluzent, stark gelb |
| V3 | trüb | 20 | getrennt | getrennt |

Es ist ersichtlich, dass mit den erfindungsgemäßen Beispielen wässrige Zusammensetzungen mit verbesserter Stabilität und geringerer Vergilbungsneigung erhalten werden.

Die erfindungsgemäßen Formulierungen wurden in bekannter Weise als Weichgriffmittel eingesetzt und verliehen den imprägnierten Geweben den gewunschten weichen Griff ohne dass eine Vergilbung festgestellt wurde.

## Patentansprüche

1. Wässrige, siliziumorganische Verbindungen enthaltende Zusammensetzungen mit kleiner Partikelgröße, bestehend aus
(A) mindestens einem stickstoffhaltigem Polyorganosiloxan,
(B) mindestens einem nichtionogenen Emulgators mit einem HLB-Wert zwischen 8 und 15,
(C) Wasser,
(D) mindestens einer organischen und/oder anorganischen Säure
sowie
(E) 0,1 bis 10 Gew.-%, bezogen auf die Gesamtmischung, einer aliphatischen organischen Verbindung der allgemeinen Formel (I) (HOCH₂)₃CR, wobei R C₁₋₄- Alkyl- oder CH₂OH-Gruppen bedeutet.

2. Zusammensetzung nach Anspruch 1, dadurch gekennzeichnet, dass die Verbindung (E) mit 1 bis 5 Gew.-% enthalten ist.

3. Verfahren zur Herstellung der wässrigen, siliziumorganische Verbindungen enthaltende Zusammensetzungen nach Anspruch 1, dadurch gekennzeichnet, dass während des gesamten oder eines Teils des Mischprozesses die Mischung mit Rotor-Stator-Homogenisatoren mit einer Umfangsgeschwindigkeit von mindestens 5 m/s homogenisiert wird.

4. Verfahren zur Herstellung der wässrigen, siliziumorganische Verbindungen enthaltende Zusammensetzungen nach Anspruch 1, dadurch gekennzeichnet, dass die Temperatur während der Herstellung kleiner 35°C beträgt.
